## Europäisches Patentamt

## European Patent Office

## Office européen des brevets

(11) Numéro de publication: **0 264 651 B1**

## FASCICULE DE BREVET EUROPEEN

(45) Date de publication de fascicule du brevet: **19.08.92**

(51) Int. Cl.⁵: **H01R 13/58**, G02B 6/38

(21) Numéro de dépôt: **87113972.1**

(22) Date de dépôt: **24.09.87**

(54) **Dispositif d'immobilisation rapide d'un élément tubulaire dans un boîtier d'appareillage et bloc de jonction pour fibres optiques doté d'un tel dispositif.**

(30) Priorité: **30.09.86 FR 8613610**

(43) Date de publication de la demande:
**27.04.88 Bulletin 88/17**

(45) Mention de la délivrance du brevet:
**19.08.92 Bulletin 92/34**

(84) Etats contractants désignés:
**DE ES FR GB IT SE**

(56) Documents cités:
**DE-A- 2 443 123**
**FR-A- 2 502 445**
**FR-A- 2 503 464**
**US-A- 4 138 185**

(73) Titulaire: **ENTRELEC SA**
**184-186 rue Léon Blum**
**F-69100 Villeurbanne(FR)**

(72) Inventeur: **Heng, Jean-Paul**
**18 rue des Tourelles**
**F-69005 Lyon(FR)**
Inventeur: **Jusseau, Marcel**
**84 rue Racine**
**F-69100 Villeurbanne(FR)**
Inventeur: **Humbert-Labeaumaz, Alain**
**"La Petite Roseraie" 7 Chemin Guillermin**
**F-69500 Bron(FR)**

(74) Mandataire: **Weinmiller, Jürgen et al**
**Lennéstrasse 9 Postfach 24**
**W-8133 Feldafing(DE)**

Rank Xerox (UK) Business Services

## Description

La présente invention concerne un dispositif d'immobilisation rapide d'un élément tubulaire, tel qu'un tronçon d'extrémité d'une fibre optique, d'un fil électrique ou d'un petit tuyau, dans un appareillage auquel cet élément tubulaire vient par exemple se raccorder, ainsi qu'un boîtier d'appareillage, de type bloc de jonction pour fibres optiques, doté d'un tel dispositif.

L'immobilisation d'un élément tubulaire, tel qu'évoqué ci-dessus, dans un appareillage à des fins de raccordement ou tout au moins de support, est un problème classique auquel de nombreuses solutions ont déjà été apportées. Toutefois, en liaison avec des problèmes particuliers nouveaux, on continue à chercher à obtenir de nouveaux dispositifs d'immobilisation, simples et peu coûteux, dont la fabrication, le montage, l'installation correcte et la manipulation soient faciles et rapides à exécuter.

Une famille de solutions prévoit une immobilisation de l'élément tubulaire dans un conduit de l'appareillage, à l'aide d'un organe dans lequel est ménagée une fente où l'élément tubulaire se coince transversalement. Dans cette famille de solutions l'un au moins des deux constituants, que forment l'organe à fente et la partie d'appareillage où se trouve le conduit, est déplacé par rapport à l'autre lors de l'immobilisation par coincement.

Pour des raisons de pression nécessaire au coincement et de commodité d'accès pour l'exécution du déplacement d'immobilisation, on prévoit souvent l'emploi d'un outil à main usuel, peu encombrant, tel un tournevis, pour transmettre un effort important par un mouvement simple, par exemple par effet de levier ou par vissage.

Par exemple, FR-A-2 503 464, au nom de la demanderesse, décrit un dispositif d'immobilisation, où un élément tubulaire est coincé, tout en étant aussi immobilisé, dans une fente d'une pièce de connexion fixe grâce au déplacement d'un organe mobile coulissant actionné à l'aide d'un outil de type tourneurs.

Le déplacement obtenu par effet de levier à l'inconvénient d'exiger une possibilité de débattement de l'outil qui n'est pas toujours compatible avec l'environnement où se trouve le dispositif d'immobilisation de l'appareillage, le déplacement par vissage présente l'inconvénient d'être relativement long à mettre en oeuvre et de ce fait d'augmenter les risques d'inachèvement de l'opération d'immobilisation, si cette opération exige une série de manoeuvres.

La présente invention propose donc un dispositif d'immobilisation rapide d'un élément tubulaire dans un boîtier d'appareillage ou l'élément tubulaire pénètre à travers un conduit d'admission fixe, qui le positionne dans le boîtier et où il est immobilisé par l'action d'un organe mobile à fente venant le chevaucher de manière à le coincer à l'intérieur de la fente. L'organe mobile est déplacé dans un guide qui interrompt le conduit d'admission depuis une position initiale permettant le coulissement de l'élément tubulaire dans le conduit d'admission jusqu'à une position finale où l'élément tubulaire est immobilisé dans le boîtier par son coincement dans la fente, qui est orientée transversalement au conduit d'admission.

Selon une caractéristique de l'invention le dispositif d'immobilisation comporte une agencement de déplacement de l'organe, mobile en translation dans son guide, sous l'effet d'une rotation axiale partielle d'une lame d'outil, de type tournevis, à section transversale rectangulaire, ledit agencement comportant deux conduits pour le passage d'une lame d'outil, dits premier et second conduit de manoeuvre respectivement ménagés l'un à travers l'organe mobile, qui est de type coulisseau, l'autre dans le boîtier à partir d'un orifice externe permettant d'introduire ladite lame d'outil à travers ces deux conduits de manoeuvre, qui permettent à la lame d'outil de prendre latéralement appui contre une portion différente de paroi interne de chacun d'entre eux, en fonction de sa position en rotation axiale, de manière que les appuis latéraux de la lame sur une portion de paroi interne de chacun des deux conduits de manoeuvre entraîne l'écartement des deux portions de parois concernées et corollairement la translation de l'organe mobile, dans un sens ou dans l'autre, lorsqu'un couple de rotation axiale est appliqué à la lame d'outil et suivant le sens dudit couple.

L'invention, ses caractéristiques et ses avantages sont précisés dans la description qui suit en liaison avec les figures répertoriées ci-après.

La figure 1 présente une vue d'une des deux moitiés accolables d'un bloc de jonction pour fibres optiques qui est équipé de deux dispositifs d'immobilisation rapide selon l'invention.

La figure 2 présente une coupe selon II-II d'un bloc de jonction pour fibres optiques équipé dont les deux moitiés sont accolées.

Les figures 3 et 4 présentent respectivement le boîtier du bloc de jonction des figures 1 et 2 en position ouverte, vu intérieurement de face et vu de dessus.

Les figures 5, 6 et 7 présentent respectivement une vue de droite, une vue de face et une vue de gauche en coupe selon VII-VII, d'un organe mobile à fente selon l'invention.

Les figures 8 et 9 présentent respectivement une vue de dessus et une coupe transversale, selon IX-IX, de l'organe mobile objet des trois figures précédentes.

Les figures 10 et 11 présentent respectivement une vue selon F de l'embouchure d'un premier conduit de manoeuvre et une coupe selon XI-XI d'un second conduit de manoeuvre.

La figure 12 présente un schéma explicatif vu selon F au ras de la face qui porte les pattes élastiques de l'organe mobile et au niveau de l'embouchure du second conduit.

La figure 13 présente une vue de l'organe mobile, tel que présenté figure 7, en position dans son guide à l'intérieur d'une des moitiés de boîtier d'un bloc de jonction pour fibres optiques.

Le dispositif d'immobilisation rapide objet de la présente invention est présenté dans le cadre d'une application prévoyant l'immobilisation de fibres optiques dans un bloc de jonction analogue à ceux mis en oeuvre pour les fils électriques, tel le bloc de jonction électrique décrit dans le brevet français 2502445 de la demanderesse.

Ce dispositif d'immobilisation rapide s'applique également l'immobilisation de fils électriques pour leur support ou leur raccordement ainsi qu'à celui de petites canalisations.

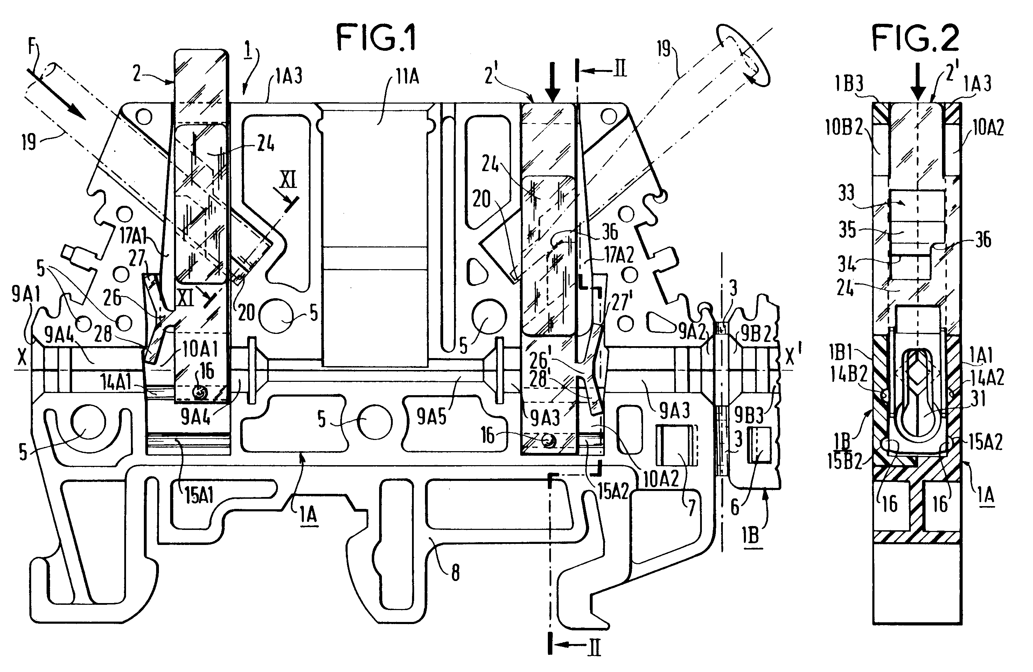

Dans l'exemple présenté sur les figures 1 et 2 deux dispositifs d'immobilisation rapide sont associés dans un même boîtier 1 de bloc de jonction pour fibres optiques.

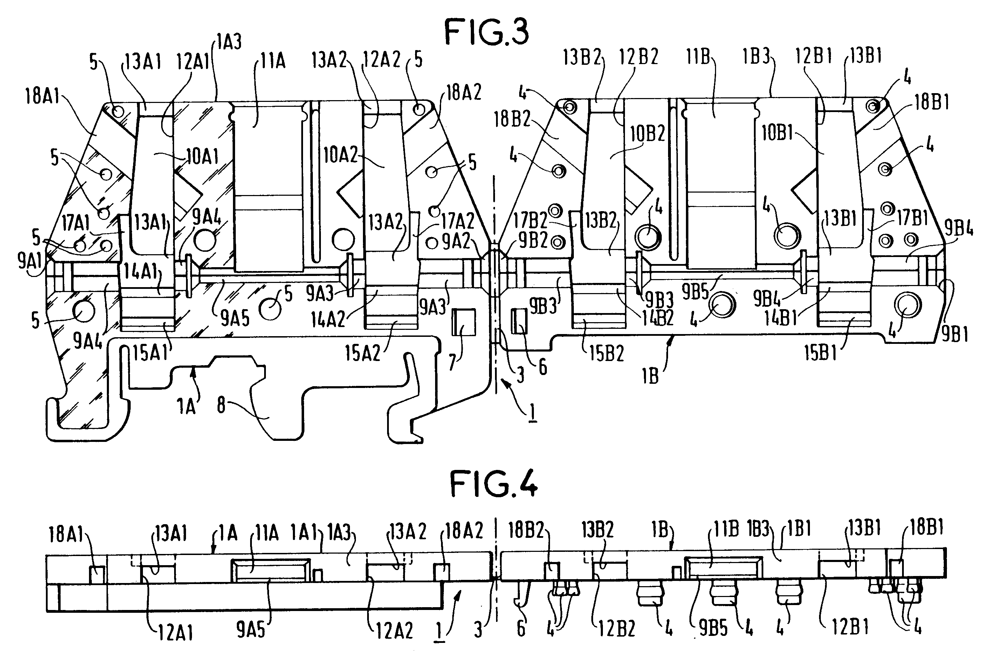

Le boîtier 1 réalisé en matériau isolant moulé est ici constitué en 2 moitiés 1A et 1B accolables dont la structure est précisée sur les figures 3 et 4, il contient notamment deux organes mobiles 2 et 2' qui sont montés dans des positions différentes, ces organes mobiles constituant un des éléments constitutifs essentiels des dispositifs d'immobilisation rapide selon l'invention.

Le boîtier 1 est ici composé de deux moitiés 1A et 1B légèrement dissemblables qui sont ici reliées par une charnière latérale 3 moulée avec elles, cette charnière 3 permet de venir appliquer la face intérieure - visible sur les figures 1 et 3 - de la moitié 1B sur la face intérieure - également visible sur ces mêmes figures - de la moitié 1A.

Un encliquetage des deux moitiés 1A et 1B l'une sur l'autre est classiquement obtenu par l'intermédiaire de tétons 4 et de trous complémentaires 5 répartis sur les faces intérieures des moitiés 1A et 1B, et/ou par au moins un crochet flexible 6 solidaire d'une des moitiés et venant s'agripper sur un rebord d'un évidemment d'encliquetage 7 de l'autre moitié.

Dans l'exemple proposé, le boîtier 1 est susceptible d'être positionné sur un profilé de support, non figuré, par un pied de fixation 8, rapporté tel que défini notamment dans le brevet français 2184215 de la demanderesse, ou moulé avec le reste du boîtier, ce pied étant ici monté sur la moitié 1A.

Le boîtier 1 du bloc de jonction pour fibres optiques est longitudinalement traversé de part en part par un conduit médian d'admission de fibres 9 constitué par deux demi-conduits qui appartiennent chacun à une moitié différente du bloc et qui ont leurs concavités orientées l'une vers l'autre.

Dans la forme de réalisation proposée, le bloc a une section transversale au moins approximativement rectangle ainsi que le montre la figure 2 ; chaque demi-conduit est rectiligne et court parallèlement à la grande paroi extérieure 1A1 ou 1B1 de la moitié qui le comporte.

Les fibres optiques à raccorder ne sont pas représentées sur les dessins, elles sont supposées être classiquement constituées chacune d'une âme cylindrique recouverte d'une gaine également cylindrique, ces âmes et ces gaines ayant respectivement mêmes diamètres pour deux fibres optiques à raccorder.

Le conduit d'admission 9 est composé d'éléments successifs, par exemple cylindriques, centrés sur un même axe longitudinal XX' et respectivement scindés chacun en deux demi-éléments complémentaires qui s'assemblent de part et d'autre d'un plan médian dit le joint du boîtier 1 assemblé, ce plan étant parallèle aux grandes parois externes 1A1, 1B1 dudit boîtier 1 assemblé.

Le conduit d'admission 9 comporte une embouchure à chacune de ses deux extrémités, un réceptacle de gaine de fibre placé à la suite de chaque embouchure et un réceptacle médian, qui est situé entre les réceptacles de gaine et dans lequel viennent s'aligner bout à bout les âmes des deux fibres à raccorder.

Chaque embouchure, qui s'oeuvre vers l'extérieur du boîtier pour faciliter l'insertion d'une fibre optique, est composée de deux demi-troncs de pyramide ou de cône appartenant chacun à une moitié différente, tels 9A1 et 9B1 ou 9A2 et 9B2.

Chaque réceptable de gaine, qui est destiné à assurer un positionnement transversale précis d'une gaine de fibre optique, est composé de deux demi-éléments creux complémentaires, par exemple deux demi-cylindres, ou deux rainures en V, ménagés chacun dans une moitié différente, tels 9A3 et 9B3 ou 9A4 et 9B4.

Les deux réceptacles de gaine sont transversalement coupés chacun par un guide différent 10A1-10B1 ou 10A2-10B2 destiné à permettre la traversée du réceptacle de gaine par un organe mobile 2 ou 2', de type coulisseau.

Le réceptacle médian, commun à deux âmes de fibres optiques à raccorder, est composé lui aussi de deux demi-éléments creux complémentaires, par exemple deux demi-cylindres ou deux rainures en V, destinés à assurer un alignement précis des âmes de deux fibres optiques, tels les demi-éléments 9A5 et 9B5.

Dans l'exemple de réalisation proposé, un puits vient transversalement aboutir dans la zone centrale du réceptacle médian commun 9A5-9B5 pour permettre de contrôler le bon raccordement des âmes de fibres optiques, qui s'effectue dans cette zone ; il est constitué par deux évidements transversaux complémentaires 11A, 11B, ménagés chacun dans une moitié de boîtier de manière à déboucher à l'extérieur de ce dernier, ici à sa partie supérieure constituée par les parties supérieures 1A3, 1B3 accolées des deux moitiés 1A, 1B (figure 2).

Les deux guides 10A1 - 10B1 ou 10A2 - 10B2 ménagés pour les organes mobiles 10 et 10' sont ici réalisés sous forme de deux cavités allongées, qui s'étendent parallèlement au puits 11A-11B, de part et d'autre de ce dernier lorsque le boîtier 1 est assemblé.

Chacune de ces deux cavités est constituée de deux évidements complémentaires, ici symétriques par rapport au plan médian de joint des parties 1A et 1B, ces évidements sont destinés à assurer un guidage en translation des organes mobiles.

En ce but chaque guide comporte une face d'appui contre laquelle on vient plaquer l'organe mobile 2 ou 2' concerné, et qui est constituée par deux surfaces d'appui coplanaires, accolées, portées chacune par l 'une des moitiés 10A ou 10B, telle la face d'appui constituée par les surfaces 12A1 et 12B1 pour le guide 10A1-10B1. Les deux faces 12A1-12B1 et 12A2-12B2 sont ici placées dos à dos de part et d'autre du puits 11A-11B.

Chaque face d'appui 12A1-12B1 ou 12A2-12B2 est bordée par deux rives de guidage parallèles entre elles qui lui sont perpendiculaires et qui appartiennent chacune à une moitié 1A ou 1B différente du boîtier 1, telles les rives 13A1 et 13B1 pour le guide 10A1-10B1.

Dans l'exemple de réalisation choisi, chaque guide débouche à travers les deux parties supérieures accolées 1A3 et 1B3 du boîtier, ce qui permet de contrôler visuellement la position prise par l'organe mobile 2 ou 2', que contient ce guide.

Les rives de guidage sont ici dotées chacune de deux cannelures transversales superposées qui sont séparées par une distance égale à la course normale autorisée pour un organe mobile, telles les cannelures 14A1, 15A1, de la rive de guidage 13A1. Ces cannelures coopèrent à cet effet avec des renflements 16 portés par la base des organes mobiles, pour indiquer les positions limites autorisées pour ces organes et les y maintenir.

Un évidement de pressage, tel 17A1-17B1, est ménagé de l'autre côté de la face d'appui en fond de cavité de chaque guide et il est constitué par accolage de deux demi-évidements, ici 17A1 et 17B1, appartenant à deux moitiés 1A et 1B accolées, la constitution de cet évidement et ses fonctions seront précisées plus loin en liaison avec la figure 13.

Chaque guide 10A1-10B1 ou 10A2-10B2 est traversé par un conduit, dit premier conduit de manoeuvre, permettant le passage d'une lame d'outil, de type tournevis, à section rectangulaire - figure 1 -.

Chaque premier conduit de manoeuvre est composé de deux demi-conduits appartenant chacun à une moitié 1A ou 1B différente, tel le second conduit 18A1-18B1 par les demi-conduits 18A1 et 18B1.

Dans une forme préférée de réalisation, l'axe des premiers conduits de manoeuvre est coplanaire avec celui des guides et celui XX' du conduit d'admission dans le plan de joint médian du boîtier 1.

Chaque premier conduit de manoeuvre est incliné par rapport à la face d'appui de guide qu'il traverse et il s'étend de part et d'autre de ce guide, ainsi qu'on le voit sur les figures 1 et 3.

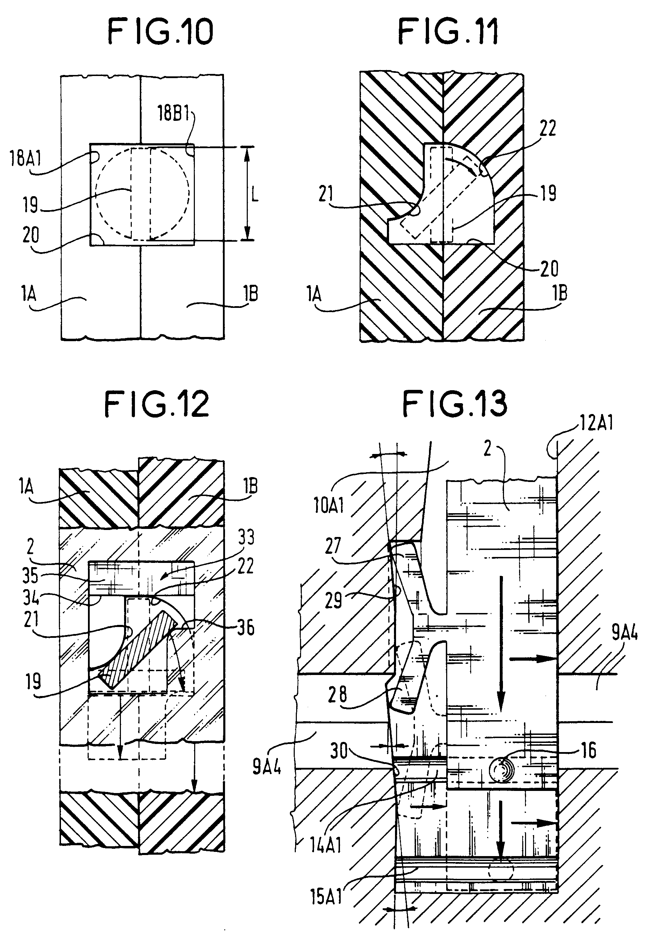

Dans l'exemple de réalisation proposé, l'orifice de chaque premier conduit de manoeuvre est conçue pour limiter la largeur de lame de tournevis à une valeur maximale "L" prédéterminée -figure 10 -et pour permettre d'y tourner un tournevis d'une telle largeur. Dans l'exemple proposé, chaque premier conduit de manoeuvre a une section transversale carrée dans sa zone comprise entre son orifice et le guide qu'il traverse, chaque demi-conduit ayant un profil transversal en U, tels les demi-conduits 18A1, 18B1 complémentaires - figure 10 -.

La portion borgne formant le fond d'un premier conduit de manoeuvre, qui est située au delà du guide associé, par rapport à l'embouchure du conduit, à une section transversale inscriptible dans un carré de même dimension que la section transversale précédemment évoquée, sans être elle même carrée ; elle est conçue pour n'autoriser qu'une rotation d'un quart de tour à la lame d'outil 19 qui y est introduite.

En ce but la section transversale de ladite portion borgne a, sur au moins une partie de sa longueur, l'allure montrée sur la figure 11, avec :

- une portée plane 20 qui a une étendue transversale légèrement supérieure à "L" pour permettre l'appui du plat de la lame d'outil 19 ;
- une zone centrale qui est perpendiculaire à ladite portée plane 20 et qui a même étendue à partir du milieu de cette portée plane, de manière à permettre le positionnement de la lame d'outil 19 avec son plat perpendiculaire à la partie plane 20, en son milieu ;
- deux zones arrondies l'une 21 convexe, l'autre 22 concave permettent de passer progressivement par rotation axiale d'une position à plat de la lame d'outil à la position perpendiculaire définie ci-dessus et inversement, sans sortir la lame d'outil 19 du fond du premier conduit de manoeuvre.

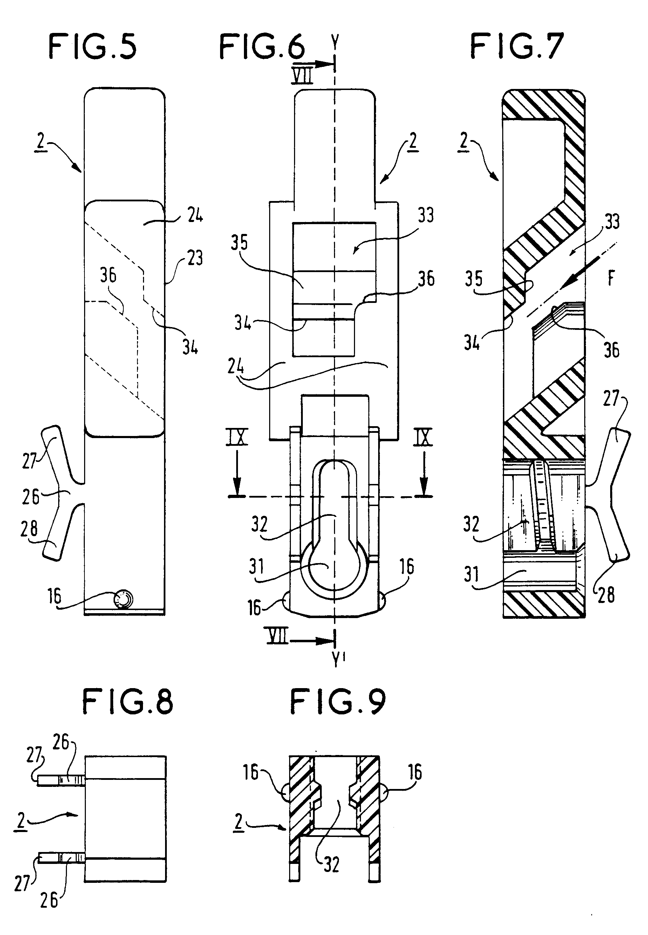

Les organes mobiles 2 et 2' d'un même boîtier 1 de bloc de jonction sont préférablement identiques et sont précisés en liaison avec les figures 5 à 9 et 13.

Chaque organe mobile de type coulisseau est conçu pour se déplacer en translation dans son guide, tel l'organe mobile 2 en position initiale dans le guide 10A1-10B1 ou l'organe mobile 2' en position finale dans le guide 10A2-10B2 - figure 1-.

Chaque élément mobile prend appui sur une face d'appui de guide, telle 12A1, par sa paroi 23 notamment au niveau de deux patins longitudinaux 24 qui sont situés de part et d'autre du corps central 25 de cet élément mobile et qui viennent coulisser dans deux évidemments qui ouvrent ici les guides de part et d'autre du boîtier 1 et qui limitent la course en translation de l'organe mobile qu'ils conteinnent partiellement.

Dans l'exemple de réalisation proposé, la paroi 23 d'un organe mobile est plaquée contre la face d'appui par l'action d'un dispositif presseur 26 qui est réalisé sur la face de l'élément mobile à l'opposé de la paroi 23.

Ce dispositif presseur 26 est placé ici dans la zone de l'élément mobile 2 qui vient se loger en fond de guide, il comporte deux paires de pattes élastiques 27 et 28 destinées à venir prendre appui sur une paroi d'un d'évidemment de passage, tel 17A1-17B1 ménagé latéralement en fond de guide. La paroi de ce fond est par exemple dotée de deux rampes obliques 29, 30 suivies chacune d'un plat contre lesquelles pressent les pattes élastiques du dispositif presseur de manière que l'enfoncement de l'organe mobile vers le fond du guide augmente la pression dudit organe mobile contre la paroi d'appui, ici 12A1, en raison de la poussée accrue des pattes -figure 12-.

L'extrémité de l'organe mobile pénétrant un fond de guide est ici dotée d'un conduit transversal de passage de fibre 31 qui est aligné avec l'axe du réceptacle de gaine, tel 9A4-9B4, que tranverse l'organe mobile qui le comporte, lorsque cet organe mobile est placé en position initiale en haut de guide et permet la pénétration d'une fibre dans ledit conduit de passage 31.

Ce dernier est surmonté par une fente de coincement de gaine de fibre 32 transversalement disposée par rapport à son axe et légérement inclinée de manière que l'enfoncement de l'organe mobile, qui les porte, dans son guide tend à entraîner la fibre par sa gaine vers la face d'appui, telle 12A1, contre lequel cet organe mobile est plaqué par le dispositif élastique 26.

La largeur de la fente de coincement 32 est choisie de manière connue en soi pour permettre l'immobilisation d'une fibre de dimension diamétrale déterminée.

Le fente de coincement 32 est surmontée par un conduit 33 de passage de lame d'outil 19, qui est dénommé par la suite second conduit de manoeuvre 33 et qui traverse obliquement le coulisseau selon une direction pratiquement parallèle à celle du premier conduit de manoeuvre, tel 18A1-18B1, qui traverse le guide où est logé l'organe mobile 2 comportant ledit second conduit de manoeuvre.

Ce dernier coopère avec le premier conduit de manoeuvre correspondant pour assurer le déplacement de l'organe mobile le comportant, dans son guide, entre les positions limites de translation fixées par les cannelures, telles que 14A1 et 15A1.

A cet effet chaque second conduit de manoeuvre 33, comporte au moins une portée interne plane 34 - figures 6 et 7 -venant se placer parallèle et en regard de la portée plane 20 du fond du premier conduit de manoeuvre associé au guide dans lequel se meut l'organe mobile qui comporte ce second conduit de manoeuvre considéré. Ceci permet l'insertion à plat d'une lame d'outil 19 en appui par une face contre la portée plane 20 de part et d'autre du guide concerné et par l'autre face contre la portée plane 34, lorsque l'organe mobile est entièrement escamoté dans le boîtier, tel 2' à droite sur la figure 1.

Chaque second conduite 33 comporte aussi une portée convexe 36 réalisée à l'opposé de la portée convexe 21 que comporte le premier conduit de manière que ces deux portées s'appliquent de part et d'autre d'une lame d'outil 19 enfoncée de flanc jusqu'au fond de premier conduit ; l'organe mobile saille alors hors du boîtier, tel 2 à gauche sur la figure 1.

Dans la forme de réalisation proposée les portées convexes 21 et 35 sont sur deux côtés opposés du tube à section au moins grossièrement carrée que sont susceptibles de former les deux conduits de manoeuvre d'un même dispositif d'immobilisation, alors que les deux portées planes 20 et 34 correspondent aux deux autres côtés du carré.

Le sens de rotation de la lame d'outil 19 est déterminé par la forme du fond du premier conduit de manoeuvre et par les positions respectives des portées 20, 34 et 21, 36. Une facette 35, ménagée dans le second conduit 33, réduit la hauteur de l'embouchure apparente du second conduit à une valeur plus faible que "L", en liaison avec la portée plane 20 du premier conduit, lorsque l'organe mobile est escamoté dans le boîtier, elle interdit l'introduction d'une lame d'outil 19 dans le second conduit de manoeuvre autrement qu'à plat.

La facette 35 est ici parallèle au sens de déplacement de l'organe mobile et adjacente à la portée plane 34.

La lame d'outil 19 vient alors buter contre la facette 35, si elle est présentée autrement que parallèle aux portées planes 20 et 34, la bonne présentation étant montrée sur la partie droite de la figure 1, l'organe mobile 2' étant en position basse de coincement de fibre.

Une rotation d'un quart de tour, fait appuyer les faces planes de la lame d'outil sur les portées convexes 21 et 35 ce qui écarte ces portées l'une de l'autre et déplace l'organe mobile en conséquence de manière à lui faire atteindre la position en saillie présentée à gauche sur la figure 1.

Dans cette position limite le conduite de passage 31 de l'organe mobile 2 a son axe longitudinal aligné avec celui du conduit d'admission 9 et permet l'insertion d'une fibre sous la fente de coincement 32, une signalisation visuelle est ici fournie par le dépassement de l'élément mobile 2 hors du boîtier 1 où il est escamoté lorsqu'il est en sa seconde position limite.

De même que précédemment l'introduction de la lame d'outil 19 en une position autre que celle de flanc est empêchée par la présence de la portée convexe 34 de l'organe mobile concerné qui réduit l'embouchure apparente du tube que forment alors les deux conduits de manoeuvre et empêche toute introduction non prévue de ladite lame.

Une rotation de la lame d'outil d'un quart de tour inverse de celle évoquée plus haut entraîne l'écartement des portées planes 20 et 34 sous l'action des bords longitudinaux de la lame et par conséquent l'escamotage de l'organe mobile concerné dans le boîtier. Le mouvement d'escamotage correspond au mouvement de coincement de fibre dans la fente 32 correspondante.

Bien entendu le dispositif d'immobilisation rapide selon l'invention exige l'emploi d'une lame d'outil standard de section transversale déterminée.

L'immobilisation rapide d'une fibre, dont l'âme a été préalablement dénudée sur une longueur déterminée, s'effectue par réalisation des deux phases suivantes :

- en premier, insertion de la fibre à travers le conduit d'admission 9 à partir d'une extrémité, l'organe mobile 2 ayant été préalablement placé en position telle que montrée à gauche sur la figure 1 par une rotation appropriée d'une lame d'outil 19 introduite dans ses conduits de manoeuvre, l'âme de la fibre pénétrant dans le réceptacle médian 9B5 jusqu'en son milieu sous le puits 11A, la gaine de la fibre s'arrêtant en butée en fond de réceptacle de gaine, tel 9A4 ;
- en second, rotation invers e d'un quart de tour de la lame 19, maintenue ou réintroduite à travers les conduits de manoeuvre, ce qui escamote l'organe concerné qui vient coincer la fibre.

Le raccordement de deux fibres optiques entre elles dans le bloc de jonction présenté figure 1 s'effectue par insertion et immobilisations successives de deux fibres introduites chacune par une des embouchures de conduit d'admission.

Le raccordement proprement dit des âmes des fibres s'effectue par mise bout à bout de leurs âmes d'une manière classique qui ne sera pas rappelée ici.

**Revendications**

1. Dispositif d'immobilisation rapide d'un élément tubulaire comprenant un boîtier d'appareillage (1) où l'élément tubulaire pénètre à travers un conduit d'admission (9), fixe, qui le positionne dans le boîtier permettant le coulissement de l'élément tubulaire et un organe mobile contenu dans le boîtier, ledit dispositif d'immobilisation étant caractérisé en ce que ledit organe mobile (2) comprend une fente (32) venant chevaucher l'element tubulaire de manière à le coincer à l'intérieur de la fente, lorsque cet organe mobile est déplacé, dans un guide (10) qui interrompt le conduit d'admission depuis une position initiale, jusqu'à une position finale où l'élément tubulaire est immobilisé dans le boîtier par son coincement dans la fente qui est orientée transversalement au conduit d'admission, ledit dispositif d'immobilisation comportant un agencement de déplacement de l'organe mobile en translation dans son guide, sous l'effet d'une rotation axiale partielle d'une lame d'outil (19), de type tournevis, à section transversale rectangulaire, deux conduits (18A1-18B1, 33) étant prévus pour le passage d'une lame d'outil, dits premier et second conduits de manoeuvre, le second étant ménagé à travers l'organe mobile, qui est de type coulisseau, le premier étant ménagé dans le boîtier à partir d'un orifice externe permettant d'introduire ladite lame d'outil à travers ces deux conduits de manoeuvre, qui permettent eux-mêmes à la lame d'outil de prendre latéralement appui contre une portion différente de paroi interne (21 et 36 ou 20 et 34) de chacun d'entre eux, en fonction de sa position en rotation axiale, de manière que les appuis latéraux de la lame sur une portion de paroi interne de chacun des deux conduits de manoeuvre entraîne l'écartement des deux portions de parois concernées et corollairement la translation de l'organe mobile, dans un sens ou dans l'autre, lorsqu'un couple de rotation axiale est appliqué à la lame d'outil et suivant le sens dudit couple.

2. Dispositif d'immobilisation rapide selon la revendication 1 caractérisé en ce que des portions de paroi interne du premier et du second conduit de manoeuvre (18A1-18B1, 33) qui servent aux appuis latéraux de la lame d'outil (19) pour les translations de l'organe mobile, comportent au moins, d'une part, deux portées planes (20 et 34) réalisées chacune dans un conduit de manoeuvre différent et se plaquant de part et d'autre de la lame d'outil (19) qui vient prendre appui sur elles par ses bords longitudinaux pour l'une des deux translations de sens inverse dudit organe mobile, d'autre part deux portées convexes (21 et 36) réalisées chacune dans une conduit de manoeuvre différent et se plaquant de part et d'autre de la lame d'outil qui vient prendre appui sur elles par ses faces pour l'autre sens de translation dudit organe mobile, les dites portées convexes étant disposées latéralement par rapport aux portées planes (20 et 34) dans les conduits de manoeuvre.

3. Dispositif d'immobilisation rapide selon la revendication 2, caractérisé en ce que le premier conduit de manoeuvre (18A1, 18B1) possède un orifice dont l'embouchure limite la section transversale de lame d'outil (19) à une valeur prédéterminée et se prolonge au delà du guide (10A1-10B1) où il aboutit par une portion dont la section transversale est conformée de manière à ne permettre qu'une rotation axiale bidirectionnelle d'un quart de tour de la lame d'outi l entre deux positions déterminées.

4. Dispositif d'immobilisation rapide selon la revendication 2 caractérisé en ce que la portion du premier conduit de manoeuvre (18A1) où sont situées les portées de l'agencement de déplacement qui appartiennent à ce premier conduit de manoeuvre, autorise une rotation axiale d'un quart de tour de la lame d'outil (19), pour laquelle ladite lame d'outil passe d'une première position où l'une de ses deux faces est plaquée contre la portée plane que comporte ledit premier conduit de manoeuvre à une seconde position à angle droit, pour laquelle un bord longitudinal de ladite lame d'outil est face à ladite portée plane en son centre.

5. Dispositif d'immobilisation rapide selon la revendication 2, caractérisé en ce que le premier conduit de manoeuvre coopère avec le second conduit de manoeuvre pour n'offrir qu'une seule position spécifique d'insertion à la lame d'outil (19) pour chaque position limite de l'organe mobile.

6. Bloc de jonction pour fibres optiques, à dispositif d'immobilisation rapide selon la revendication 1, dans lequel au moins un conduit d'admission (9) rectiligne reçoit deux fibres bout à bout avec leurs âmes et leurs gaines respectivement dans un réceptacle médian commun (9A5-9B5) et dans deux réceptacles de gaines (9A3-9B3 et 9A4-9B4), caractérisé en ce qu'il comporte au moins deux organes mobiles (2, 2') à fente dans un même boîtier (1) où les fibres sont individuellement immobilisées chacune par l'action d'un desdits organes mobiles (2 ou 2') à fente venant la chevaucher de manière à coincer sa gaine, lorsque l'organe mobile est déplacé dans un guide (10A1-10B1) qui interrompt le réceptacle de gaine (9A4-9B4) concerné depuis une position initiale permettant l'insertion de la gaine de fibre concernée dans le réceptacle de gaine, jusqu'à une position finale où la fibre est immobilisée par le coincement de sa gaine par l'organe mobile (2) concerné du boîtier.

7. Bloc de jonction selon la revendication 6, caractérisé en ce que le boîtier (1) est constitué de deux moitiés (1A, 1B) accolables au moins approximativement semblables dans lesquelles le conduit d'admission, les guides et les premiers conduits de manoeuvre sont réalisés par demi-conduits complémentaires.

8. Bloc de jonction selon la revendication 7, caractérisé en ce que chaque élément mobile (2 ou 2') est plaqué contre une face d'appui (12A1-12B1 ou 12A2-12B2), contre laquelle il coulisse par l'intermédiaire d'un dispositif presseur (26) à paires de pattes élastiques (27, 28) prenant appui sur deux rampes légèrement obliques (29, 30) permettant d'augmenter la pression dudit organe mobile lorsque cet organe mobile est déplacé en translation de sa position initiale à sa position finale.

9. Bloc de jonction selon la revendication 8, caractérisé en ce que la fente de coincement (32) est inclinée par rapport au réceptacle de gaine (9A4, 9B4) où elle pénètre de manière à tendre à pousser vers le réceptacle médian (9A5-9B5)la fibre qu'elle coince.

**Claims**

1. A device for rapidly fixing a tubular element, comprising an apparatus housing (1) into which the tubular element penetrates via a stationary inlet duct (9) which positions it in the housing, enabling the tubular element to slide, and a moving member (2) comprised in the housing, characterized in that said moving member (2) comprises a slot (32) which overlaps the tubular element in such a manner as to wedge it inside the slot when said moving member is displaced within a guide (10) which passes through the inlet duct from an initial position to a final position in which the tubular element is fixed inside the housing by being clamped in the slot which is oriented transversely to the inlet duct, said fixing device including an arrangement for displacing the moving member in translation along its guide under the effect of a partial axial rotation of the blade of a tool (19) of the screwdriver type having a rectangular cross-section, two ducts (18A1-18B1, 33) being provided for passing a tool blade, said ducts being referred to as "first" and as "second" operating ducts, the second duct being provided through the moving member which is of the slide type, and the first duct being provided in the housing from an external orifice enabling said tool blade to be inserted through both operating ducts which enable the tool blade to press sideways against different portions (21 and 36 or 20 and 34) of the inside wall of each of them as a function of the axial rotation of the blade, in such a manner that the sideways thrust of the blade on an internal wall portion of each of the two operating ducts causes the two wall portions concerned to move apart and thereby gives rise to translation of the moving member in one direction or the other whenever an axial rotary torque is applied to the tool blade, and in the same direction as said torque.

2. A rapid fixing device according to claim 1, characterized in that the internal wall portions of the first and second operating ducts (18A1-18B1, 33) which serve as side bearing surfaces for the blade of the tool (19) to provide translation of the moving member comprise at least: firstly two plane bearing surfaces (20 and 34) each made in a different one of the operating ducts and bearing against opposite sides of the blade of the tool (19) which bears against them via its longitudinal edges for one of the two opposite direction translations of said moving member; and secondly two convex bearing surfaces (21 and 36) each made in a different one of the operating ducts and pressing against opposite sides of the blade of the tool which bears against them via its opposite faces for the other translation direction of said moving member, said convex bearing surfaces being disposed sideways relative to the plane bearing surfaces (20 and 34) in the operating ducts.

3. A rapid fixing device according to claim 2, characterized in that the first operating duct (18A1, 18B1) includes an orifice whose opening limits the cross-section of the blade of the tool (19) to a predetermined value and extending beyond the guide (10A1-10B1) into which it opens out by means of a portion whose cross-section is shaped in such a manner as to allow two-way axial rotation of the blade of the tool through only one-quarter of a turn between two determined positions.

4. A rapid fixing device according to claim 2, characterized in that the portion of the first operating duct (18A1) in which the bearing surfaces of the displacement arrangement belonging to said first operating duct are situated allows the blade of a tool (19) to rotate axially through a quarter-turn, to enable said tool blade to pass between a first position in which one of its two faces is pressed against the plane bearing surface of said first operating duct, and a second position at right angles in which a longitudinal edge of said tool blade faces said plane bearing surface at its center.

5. A rapid fixing device according to claim 2, characterized in that the first operating duct co-operates with the second operating duct to provide only one specific insertion position for the blade of the tool (19) for each limiting position of the moving member.

6. An optical fiber terminal block including a rapid fixing device according to claim 1, wherein at least one rectilinear inlet duct (9) receives two fibers end-to-end with their cores and their sheaths respectively received in a common middle receptacle (9A5-9B5) and in two sheath receptacles (9A3-9B3 and 9A4-9B4), characterized in that it includes at least two slotted moving members (2, 2') in a common housing (1) in which the fibers are individually fixed, each being fixed by the action of one of said slotted moving members (2 or 2') moving astride thereover so as to clamp its sheath when said moving member is displaced in a guide (10A1-10B1) which intersects the sheath receptacle (9A4-9B4) concerned between an initial position enabling the sheath of the fiber concerned to be inserted into the fiber sheath receptacle, and a final position in which the fiber is fixed by its sheath being clamped by the corresponding moving member (2) of the housing.

7. A terminal block according to claim 6, characterized in that the housing (1) is made up of two joinable halves (1A, 1B) which are at least approximately similar and in which the inlet duct, the guides, and the first operating ducts are made in the form of complementary half-ducts.

8. A terminal block according to claim 7, characterized in that each moving element (2 or 2') is pressed against a bearing face (12A1-12B1 or 12A2-12B2) against which it slides by means of a pusher device (26) comprising pairs of resilient tabs (27, 28) bearing against two slightly sloping ramps (29, 30) enabling the pressure of said moving member to be increased when said moving member is displaced in translation from its initial position to its final position.

9. A terminal block according to claim 8, characterized in that the clamping slot (32) is inclined relative to the sheath receptacle (9A4, 9B4) into which it penetrates in such a manner as to tend to urge the fiber that it clamps towards the middle receptacle (9A5-9B5).

**Patentansprüche**

1. Vorrichtung zur schnellen Festlegung eines rohrförmigen Elements, die ein Gerätegehäuse (1), in das das rohrförmige Element durch einen feststehenden Einlaßkanal (9) eindringt, der es im Gehäuse in Stellung bringt und das Gleiten des rohrförmigen Elements erlaubt, und ein in diesem Gehäuse enthaltenes bewegliches Organ (2) aufweist, dadurch gekennzeichnet, daß dieses bewegliche Organ (2) einen Schlitz (32) aufweist, der so auf dem rohrförmigen Element aufsitzt, daß er es im Inneren des Schlitzes einklemmt, wenn dieses bewegliche Organ in einer den Einlaßkanal unterbrechenden Führung (10) von einer Ursprungsstellung bis zu einer Endstellung bewegt wird, in der das rohrförmige Element in dem Gehäuse durch sein Einklemmen in dem Schlitz festgelegt ist, der quer zum Einlaßkanal ausgerichtet ist, wobei die Vorrichtung eine Anordnung zur Verschiebung des beweglichen Organs in Querrichtung in seiner Führung aufweist, und zwar aufgrund einer axialen Teildrehung einer Werkzeugklinge (19) von der Art Schraubendreher mit rechteckigem Querschnitt, wobei zwei Kanäle (18A1-18B1, 33), erster und zweiter Betätigungskanal genannt, für den Durchlaß einer Werkzeugklinge vorgesehen sind, wobei der zweite durch das bewegliche Organ verläuft, das ein Schieber ist, und der erste im Gehäuse von einer äußeren Öffnung ausgeht, die es ermöglicht, diese Werkzeugklinge durch diese beiden Betätigungskanäle einzuführen, die es ihrerseits der Werkzeugklinge ermöglichen, sich seitlich gegen einen anderen Bereich der Innenwand (21 und 36 oder 20 und 34) jedes Kanals anzulegen, und zwar in Abhängigkeit von ihrer Drehposition, so daß das seitliche Anliegen der Klinge auf einem Bereich der Innenwand jedes der beiden Betätigungskanäle das Auseinanderspreizen der beiden betroffenen Wandbereiche bewirkt und zusätzlich die Verschiebung des beweglichen Organs in einer Richtung oder in Gegenrichtung, wenn ein axialer Drehmoment in der entsprechenden Richtung auf die Werkzeugklinge ausgeübt wird.

2. Vorrichtung zum schnellen Festlegen nach Anspruch 1, dadurch gekennzeichnet, daß Innenwandbereiche des ersten und zweiten Betätigungskanals (18A1-18B1, 33), die zum seitlichen Anliegen der Werkzeugklinge (19) für die Verschiebungen des beweglichen Organs dienen, mindestens einerseits zwei ebene Lagerflächen (20 und 34), die je in einem anderen Betätigungskanal vorgesehen sind und sich an je eine Seite der Werkzeugklinge (19) anlegen, die sich auf ihnen über ihre Längsränder für eine der beiden Bewegungen in entgeengesetzter Richtung dieses beweglichen Organs abstützt, und andererseits zwei konvexe Lagerflächen (21 und 36) aufweisen, die je in einem anderen Betätigungskanal vorgesehen sind und sich zu beiden Seiten der Werkzeugklinge anlegen, die sich auf ihnen über ihre Flächen abstützt für die andere Verschiebungsrichtung des beweglichen Organs, wobei die konvexen Lagerflächen seitlich in Bezug auf die ebenen Lagerflächen (20 und 34) in den Betätigungskanäle angeordnet sind.

3. Vorrichtung zum schnellen Festlegen nach Anspruch 2, dadurch gekennzeichnet, daß der erste Betätigungskanal (18A1, 18B1) eine Öffnung aufweist, deren Mündung den Querschnitt der Werkzeugklinge (19) auf einen vorbestimmten Wert begrenzt und sich über die Führung (10A1-10B1) hinaus verlängert, wo sie mit einem Bereich endet, dessen Querschnitt so ausgebildet ist, daß er nur eine axiale Drehung in beiden Drehrichtungen um eine Vierteldrehung der Werkzeugklinge zwischen zwei bestimmten Stellungen erlaubt.

4. Vorrichtung zum schnellen Festlegen nach Anspruch 2, dadurch gekennzeichnet, daß der Bereich des ersten Betätigungskanals (18A1), in dem sich die Lagerflächen der Verschiebungsanordnung befinden, die zu diesem ersten Betätigungskanal gehören, eine axiale Vierteldrehung der Werkzeugklinge (19) erlaubt, bei der diese Werkzeugklinge von einer ersten Stellung, in der eine ihrer Flächen gegen die ebene Lagerfläche dieses Betätigungskanals anliegt, in eine zweite dazu rechtwinklige Stellung übergeht, in der ein Längsrand dieser Werkzeugklinge dieser ebenen Lagerfläche in ihrer Mitte gegenüberliegt.

5. Vorrichtung zum schnellen Festlegen nach Anspruch 2, dadurch gekennzeichnet, daß der erste Betätigungskanal so mit dem zweiten Betätigungskanal zusammenwirkt, daß nur eine spezifische Stellung zum Einführen der Werkzeugklinge (19) für jede Endstellung des beweglichen Organs möglich ist.

6. Verbindungsblock für Lichtleitfasern mit einer Vorrichtung nach Anspruch 1, in dem mindestens ein geradliniger Einlaßkanal (9) zwei Fasern stirnseitig aneinanderstoßend mit ihren Seelen und Hüllen in einem gemeinsamen zentralen Raum (9A5-9B5) bzw. in zwei Hüllenaufnahmeräumen (9A3-9B3 und 9A4-9B4) empfängt, dadurch gekennzeichnet, daß er mindestens zwei bewegliche Organe (2, 2') mit Schlitz in einem gemeinsamen Gehäuse (1) aufweist, wo die Fasern einzeln festgelegt werden durch Einwirkung eines dieser beweglichen Organe (2, 2'), dessen Schlitz so auf der Faser aufsitzt, daß ihre Hülle eingeklemmt wird, wenn das bewegliche Organ in einer den betreffenden Raum zur Aufnahme der Hülle (9A4-9B4) unterbrechenden Führung (10A1-10N1) von einer Ursprungsstellung, die die Einführung der Faserhülle in den Raum erlaubt, bis zu einer Endstellung, in der die Faser durch das Einklemmen ihrer Hülle durch das betreffende bewegliche Organ (2) des Gehäuses festgelegt wird, bewegt wird.

7. Verbindungsblock nach Anspruch 6, dadurch gekennzeichnet, daß das Gehäuse (1) aus zwei aneinanderfügbaren Hälften (21A, 1B) besteht, die mindestens in etwa gleich sind und in denen der Einlaßkanal, die Führungen und die ersten Betätigungskanäle aus komplementären Halbkanälen bestehen.

8. Verbindungsblock nach Anspruch 7, dadurch gekennzeichnet, daß jedes bewegliche Element (2 oder 2') gegen eine Anlagefläche (12A1-12B1 oder 12A2-12B2) anliegt, gegen die es über eine Preßvorrichtung (26) mit biegsamen Laschenpaaren (72, 28) gleitet, die sich auf zwei leicht schrägen Rampen (29, 30) abstützen, was es erlaubt, den Druck dieses beweglichen Organs zu erhöhen, wenn dieses bewegliche Organ von seiner Ursprungsstellung zu seiner Endstellung verschoben wird.

9. Verbindungsblock nach Anspruch 8, dadurch gekennzeichnet, daß der Klemmschlitz (32) in Bezug auf den Raum (9A4, 9B4) zur Aufnahme der Hülle geneigt ist, in den er so eindringt, daß er die Tendenz hat, die Faser, die er einklemmt, zum mittleren Raum (9A5-9B5) zu schieben.

# FIG.1

# FIG.2

EP 0 264 651 B1

FIG.3

FIG.4

# FIG.5

# FIG.6

# FIG.7

# FIG.8

# FIG.9

# FIG.10

# FIG.11

# FIG.12

# FIG.13

14